# EUROPÄISCHE PATENTSCHRIFT

(11) **EP 0 406 779 B1**
(45) Veröffentlichungstag und Bekanntmachung des Hinweises auf die Patenterteilung: **15.06.1994**
(21) Anmeldenummer: 90112622.7
(22) Anmeldetag: 03.07.1990
(51) Int. Cl.: A01G 13/00, A01N 25/34

(54) **Vorrichtung zur Abgabe systemischer Wirkstoffe an Pflanzen und Verwendung derselben**
Device for delivery of systemic active substances to plants and its use
Dispositif pour la livraison de substances actives systémiques à des plantes et son utilisation

(30) Priorität: 07.07.1989 DE 3922366
(43) Veröffentlichungstag der Anmeldung: 09.01.1991
(73) Patentinhaber: LTS Lohmann Therapie-Systeme GmbH & Co. KG, 56513 Neuwied (DE)
(72) Erfinder: Hoffmann, Hans-Rainer, Dr., D-5450 Neuwied 22 (DE); Maass, Jürgen, Dipl.-Bio., D-5450 Neuwied 22 (DE); Müller, Walter, Dr. Dipl.-Chem., D-5450 Neuwied 1 (DE); Roreger, Michael, D-5450 Neuwied 22 (DE)
(74) Vertreter: Flaccus, Rolf-Dieter, Dr.

(56) Entgegenhaltungen:
- DE-A- 3 020 380
- DE-A- 3 723 380
- FR-A- 2 417 941
- FR-A- 2 449 664
- GB-A- 2 212 063

## Beschreibung

Die Erfindung betrifft eine Vorrichtung zur kontrollierten Abgabe systemischer Wirkstoffe an Pflanzen durch Pflanzenoberflächen mit sekundärem Abschlußgewebe.

Es ist bekannt, daß zahlreiche Wirkstoffe von Pflanzen über die Blätter oder über die Wurzeln aufgenommen und in der Pflanze systemisch verteilt werden. Diese Wirkstoffe können beispielsweise dem Schutz der Pflanze vor Krankheitserregern und Schädlingen oder der Behandlung nach erfolgter Infektion und bereits vorhandenem Befall oder auch der Wachstumsregulierung dienen.
Um eine Verlängerung der Wirkdauer dieser Substanzen zu erreichen, wurden Formulierungen bzw. Applikationsformen entwickelt, aus denen der Wirkstoff verzögert oder kontrolliert freigesetzt wird.
Die Formulierungen werden entweder auf die Pflanze gesprüht oder in Wurzelnähe in den Boden eingebracht.
Nachteilig ist bei diesen Applikationstechniken die hohe Umweltbelastung durch Bildung von beispielsweise Sprühnebeln, die infolge der toxikologischen Eigenschaften der Wirkstoffe ein zum Teil erhebliches gesundheitliches Risiko für Mensch und Tier mit sich bringen oder verfahrensbedingt höhere Aufwandmengen an Wirkstoff erfordern, da ein Teil des applizierten Wirkstoffes nicht an die Pflanze gelangt.
Da eine genaue Dosierung des Wirkstoffs infolge äußerer Einflüsse wie Wind, Regen, Temperatur- oder Bodenverhältnisse nicht möglich ist, wird im allgemeinen überdosiert. Darüberhinaus sind diese Applikationstechniken zum Teil mit erheblichem Arbeitsaufwand verbunden, da die Bekämpfung mancher Schädlinge oder Krankheitserreger im Verlauf einer Vegetationsperiode mehrfach wiederholt werden muß.

Unter den zahlreichen Versuchen, durch Entwicklung neuer Applikationssysteme und Anwendungstechniken die beschriebenen Nachteile zu vermeiden, ist die in der DE-OS 37 23 380 beschriebene Vorrichtung zur transkutikularen Applikation systemischer Wirkstoffe bei Pflanzen zu nennen. Diese Vorrichtung besteht aus einem den Wirkstoff speichernden Träger, der eine als Kontaktschicht zur Pflanzenoberfläche wirkende Fläche aufweist, durch die der Wirkstoff an die Pflanze abgegeben wird. Die Vorrichtung, die normalerweise eine Fläche von 1-20 cm², im allgemeinen eine Dicke von 5-200 »m aufweist und bis zu 200 mg Wirkstoff enthält, kann zur Schädlingsbekämpfung, zur Ernährung oder zur Wachtstumsbeeinflussung bei Pflanzen aller Gattungen im Haus- und Gartenbereich eingesetzt werden. Sie wird an Blättern oder Stengeln der Pflanze angebracht, um einen Übergang des Wirkstoffs aus dem Wirkstoffreservoir über die Kutikula des Pflanzenteils an die Pflanze zu ermöglichen. Diese Vorrichtung ermöglicht eine Minderung der Gefahren für Mensch und Tier, beispielsweise für Nutzinsekten, eine Reduzierung der aufzuwendenden Wirkstoffmengen im Vergleich zu herkömmlichen Techniken und eine Loslösung der Beeinflussung der Wirkstoffabgabe an die Pflanze durch die äußeren Faktoren wie Wind, Regen oder Sonne.

Die in der DE-OS 37 23 380 beschriebene Vorrichtung vermag jedoch die oben beschriebenen Nachteile herkömmlicher Techniken nur teilweise zu vermeiden.
Bekanntlich befindet sich eine intakte Kutikula nur auf grünen Pflanzenteilen, wie beispielsweise Blattorganen, und auf jungen Pflanzenteilen, wie beispielsweise grünen Stengeln oder Blüten.
Pflanzen, bei denen Teile wie Sprossachse oder Äste ein sekundäres Dickenwachstum aufweisen, stoßen mit zunehmendem Alter und zunehmender Verholzung die äußeren primären Abschlußgewebe Epidermis und Kutikula ab und ersetzen diese durch sekundäre Abschlußgewebe wie sekundäre Rinde, Kork oder Borke.
Diese Gewebe, die überwiegend sklerenchymatisiert, d.h. verhärtet sind, und die die physiologischen Funktionen von Epidermis und Kutikula übernehmen, weisen eine rauhe und unebene Oberfläche auf.
Bei solchen Oberflächen jedoch, wie sie beispielsweise am Stamm oder Ast eines Baumes auftreten, kann die in der DE-OS 37 23 380 beschriebene Vorrichtung nicht die gewünschte Wirkung entfalten, da diese wegen mangelnder Schichtdicke und Verformbarkeit des Reservoirs nicht in der Lage ist, sich der Pflanzenoberfläche dergestalt anzupassen, daß ein inniger, möglichst vollflächiger Kontakt zur Pflanzenoberfläche hergestellt wird, der zu einer optimalen Abgabe des Wirkstoffes an die Pflanze unerlässlich ist.
Die Alternative, die Vorrichtung des Standes der Technik auf andere, kutikulabedeckte Pflanzenteile ohne sekundäre Abschlußgewebe, wie beispielsweise die Blätter anzuwenden, ist bei Pflanzen mit großen Verteilungsvolumina nicht sinnvoll. Zum einen wird dabei nicht die in allen Pflanzenteilen notwendige Wirkstoffkonzentration erreicht, zum anderen ist bei Applikation auf ein Blatt oder auch mehrere Blätter die örtliche Wirkstoffkonzentration an der Anwendungsstelle bereits pflanzenschädigend. Darüberhinaus ergeben sich weitere Anwendungsschwierigkeiten bei Pflanzen, bei denen kutikulabedeckte Pflanzenteile erst in einigen Metern Höhe auftreten und somit nur mit erhöhtem Aufwand erreichbar sind.

Eine Vorrichtung gemäß dem Oberbegriff des Anspruchs 1 ist aus der FR-A- 2449664 bekannt.

Der vorliegenden Erfindung liegt die Aufgabe zugrunde, eine Vorrichtung und ein Verfahren zur Pflanzenbehandlung bereitzustellen, welche die Nachteile der aus dem Stand der Technik bekannten Vorschlägen vermeiden können, und mit deren Hilfe systemische Wirkstoffe an Pflanzen jeglicher Art, jeder Größe und jeden Alters durch Pflanzenoberflächen mit verhärteten, unregelmäßigen Abschlußgeweben abgegeben werden können.

Diese Aufgabe wird gelöst durch eine Vorrichtung gemäß den Merkmalen des Hauptanspruchs. Die erfindungsgemäße Vorrichtung weist eine Rückschicht und ein Wirkstoffreservoir auf, welches verformbar und an unebene Oberflächen anpassbar ist, so daß bei unregelmäßigen sekundären, verhärteten Abschlußgeweben, die nicht von einer Kutikula bedeckt sind, eine verbesserte Kontaktbildung zwischen Wirkstoffreservoir und Pflanzenoberfläche und damit auch ein besserer Wirkstoffübergang in die Pflanze ermöglicht wird.

Gemäß einer bevorzugten Ausführungsform der Erfindung ist die Vorrichtung insgesamt flexibel, so daß die Anwendung auch bei einer starken Krümmung der mit der Vorrichtung zu versehenden Oberfläche problemlos durchgeführt werden kann. Die Vorrichtung kann aber auch starr sein und ggf. eine vorgegebene Wölbung aufweisen.
Für die Anwendung ist in jedem Fall entscheidend, daß Aufbau, Zusammensetzung und Schichtdicke des Wirkstoffreservoirs so gewählt werden, daß die für die Abgabe des systemischen Wirkstoffes an die Pflanze vorgesehene Abgabefläche der Vorrichtung durch einfaches Andrücken allen Unebenheiten der Applikationsstelle angepaßt und damit schnell und mühelos ein vollflächiger Kontakt zwischen Abgabe- und Aufnahmefläche hergestellt werden kann. Der Übergang des Wirkstoffs aus dem Reservoir in die Pflanze erfolgt dann während des gesamten Anwendungszeitraums durch die in dauerndem Kontakt stehenden Oberflächen.
Die Auswahl der Zusammensetzung des Reservoirs erfolgt unter Berücksichtigung des vorgesehenen Verwendungszwecks in jedem Falle in der Weise, daß die Abgabe systemischen Wirkstoffes an die Pflanze durch verhärtete und sklerenchymatisierte, nicht von einer Kutikula bedeckte Pflanzenoberteile erfolgen kann.
Es ist weiterhin von Vorteil, daß auch bei großen Wirkstoffmengen die kontrollierte Abgabe während eines langen Zeitraums über eine kleine Fläche durch eine entsprechende Wahl der Zusammensetzung und Schichtdicke des Reservoirs erfolgen kann.

Die Bezeichnung Reservoir wird in der vorliegenden Anmeldung als Sammelbegriff für alle Materialien und Teile der Vorrichtung verwendet, aus denen systemischer Wirkstoff an die Pflanze abgegeben wird.

Die besonderen Vorteile der erfindungsgemäßen Vorrichtung sind ihre Umweltverträglickeit, Resistenz gegen Witterungsfaktoren, wie beispielsweise Regen oder Wind, Vermeidung einer nachhaltigen Schädigung bei Pflanzen jeden Alters, einfache Anwendung und kostengünstige Herstellung mit bekannten Techniken.

Besonders vorteilhaft kann die erfindungsgemäße Vorrichtung bei sekundären, verhärteten Abschlußgeweben, wie Sproßachsen und Ästen von Pflanzen, beispielsweise Rinden, bedeckten Baum- oder Strauchstämmen eingesetzt werden.

Die Abgabe des systemischen Wirkstoffes aus dem Reservoir und die Aufnahme durch die Pflanze vollziehen sich in einer Reihe von Teilschritten und hängen von verschiedenen Faktoren ab.

Der systemsiche Wirkstoff muß in dem Reservoir in einer Form enthalten sein, die die Aufnahme in die Pflanze ermöglicht. Art, Aufbau und Zusammensetzung des Reservoirs müssen so beschaffen sein, daß nur eine bestimmte Substanzmenge pro Zeiteinheit an die Pflanze abgegeben wird.

Die Substanzaufnahme ist abhängig von der Penetration der Substanzen in epidermale und subepidermale Gewebe der Pflanze und vom Übertritt der Substanzen in die Stofftransportsysteme der Pflanze.

Auch die Größe der Kontaktfläche zwischen Pflanze und Vorrichtung beeinflußt Abgabe und Aufnahme des Wirkstoffes. Bei gegebenem Reservoir, das pro Zeiteinheit und Fläche eine bestimmte Substanzmenge abgibt, wird die Größe der Vorrichtung, und damit die Kontaktfläche des Reservoirs zur Pflanze, der Größe und dem Alter der Pflanze und insbesondere dem zur Verfügung stehenden Verteilungsvolumen angepaßt.
Die Abgaberate ist von Art, Aufbau und Zusammensetzung des Reservoirs und der thermodynamischen Aktivität von Wirkstoff im Reservoir abhängig. Bei der Wahl der Formulierung des Reservoirs und der Einstellung der Abgaberate sind vor allem Dynamik und Kinetik der systemischen Wirkstoffe in der Pflanze zu berücksichtigen, d.h. die Wirkweise der systemischen Wirkstoffe, die Konzentration an Wirkstoff, die zur Erzielung einer Wirkung mindestens nötig ist, Art und Geschwindigkeit der Verteilung, sowie Art und Geschwindigkeit des biologischen Abbaus des Wirkstoffes in der Pflanze.
Die Wirkstoffabgabe aus dem Reservoir an die Pflanze wird in jedem Fall durch die Wahl eines geeigneten Reservoirs in der Weise gesteuert und kontrolliert, daß es in der Pflanze zu keiner Kumulation an systemischem Wirkstoff kommt, d.h. daß die Konzentration an systemischem Wirkstoff in der Pflanze immer oberhalb der Wirksamkeitsgrenze und unterhalb der Konzentration liegt, ab der pflanzenschädigende Effekte auftreten können.

Unter systemischen Wirkstoffen, die mittels der erfindungsgemäßen Vorrichtung an Pflanzen abgegeben werden können, sind zu nennen die systemischen Pestizide, wie beispielsweise systemische Insektizide oder systemische Fungizide oder systemisch wirksame, wachstumsregulierende Substanzen. Systemische Fungizide sind beispielsweise Triforin, Aluminiumfosetyl, Bitertanol, Fenarimol, Tridemorph, Nuarimol, Penconazol oder Propiconazol.
Systemische Insektizide sind beispielsweise Nicotin, Demeton und -derivate, Disulfoton, Dimethoat, Mevinphos, Fenthion, Menazon oder Aldicarb.
Systemische Wachstumsförderer sind beispielsweise Auxine, Gibberelline oder Cytokinine.
Unter den systemischen Wachstumshemmern sind beispielsweise Abscisinsäure oder Ethylen zu nennen.

Bekanntlich können die genannten systemischen Wirkstoffe nach Applikation von handelsüblichen Zubereitungen, wie Lösungen, Schäumen oder Sprays von Pflanzen beispielsweise über die Blätter oder Wurzeln resorbiert werden und nach der Resorption in den Leitungssystemen der Pflanze transportiert und in der Pflanze systemisch verteilt werden.
Die Resorption durch die Pflanze kann durch Diffusion der Substanz durch Epidermis und subepidermales Gewebe und anschließenden Übertritt in die Stofftransportsysteme oder durch direkte Abgabe von Wirkstoff an die Pflanze erfolgen. Systemischer Wirkstoff wird nach der Resorption zunächst über die Langstreckentransportsysteme Xylem (Holzteil, Wassertransport) und Phloem (Siebteil, Assimilat-Transport) in der Pflanze verteilt. Überwiegend hydrophile Wirkstoffe und ionische Verbindungen werden im Holzteil, überwiegend lipophile hingegen im Siebteil transportiert. Die Verteilung systemischen Wirkstoffs in die Peripherie und in den Zentralstrang der Pflanze erfolgt über Mittelstreckentransport, der von Zelle zu Zelle in den Zellwände, so zum Beispiel bei Radialtransport im Marktstrahlparenchym, verläuft und Kurzstreckentransport, d.h. intrazellulären Transport und Transport durch Membranen.

Eine bevorzugte Ausführungsform der erfindungsgemäßen Vorrichtung weist ein Reservoir aus einem lipophilen Polymerfilm auf, welcher 1-80 Gew.-% mindestens eines Elastomers, 0,5-50 Gew.-% mindestens eines Weichmachers, 0,5-50 Gew.-% mindestens eines systemischen Wirkstoffs und 0,5-70 Gew.-% Hilfsstoffe enthält. Das Reservoir wird nach bekannten Verfahren aus Lösung, Dispersion oder Schmelze hergestellt. Als Elastomere können beispielsweise Naturkautschuk, synthetischer Kautschuk, Ethylen-Vinylacetat-Copolymere, Styrol-Butadien-Copolymere, Blockcopolymere (z.B. Styrol/Butadien/Styrol oder Styrol/Isopren/Styrol) , Polyisobutylen, Polyamid, Polyester, Polyacrylat, Polymethacrylate, Polyvinylether, Polyvinylester, Polychlorbutadien, Polyurethane, Polycaprolactame, Polycaprolactone, Cellulosederivate und Silikone verwendet werden.

Als Weichmacher eignen sich Mineralöle, flüssige Polyisobutylene, niedermolekulare Polyethylenglykole, Citronensäureester, Weinsäureester, Glycerinester, Phthalsäureester, ein-und mehrwertige Alkohole, Fette oder Wachse.

Eine weitere vorteilhafte Ausführungsform der Vorrichtung weist ein Reservoir aus einem filmförmigen Hydrogel oder einer filmförmigen, wasserhaltigen Emulsion auf, welches 0,5-50 Gew.-% mindestens eines wasserlöslichen oder wasserquellbaren Polymers, 0,5-50 Gew.-% mindestens eines systemischen Wirkstoffs, 0,5-70 Gew.-% Hilfsstoffe sowie 1-80 Gew.-% Wasser enthält.

Als wasserlösliche oder wasserquellbare Polymere können beispielsweise eingesetzt werden: Polyvinylalkohole, Polyvinylacetat, Polyvinylpyrrolidon, Polyacrylsäure und deren Derivate, Polymethacrylsäure und deren Derivate, Polyethylenglykole, Polypropylenglykol, Cellulosederivate, Stärke und Stärkederivate, Galaktomannane, Xanthan, Guarderivate, Carrageen, Alginate, Pektine, Gelatine, Gummi arabicum.

Alle Reservoirtypen können als Hilfsstoffe die o.g. Weichmacher, Verdickungs- und Quellmittel, Penetrationsbeschleuniger, Klebrigmacher, Konservierungsmittel, Desinfektionsmittel, pH-Regulatoren, Antioxidantien, Emulsationsstabilisatoren, Vernetzungsmittel, Füllstoffe und/oder Schaumstabilisierungsmittel enthalten.

Neben den genannten wasserlöslichen oder wasserquellbaren Polymeren kann das Reservoir als Verdickungs- und Quellmittel beispielsweise kolloidale Kieselsäure, Quelltone, Mono- oder Disaccharide, wie Glucose, Fructose, Lactose, Maltose und Saccharose oder Oligosaccharide, wie Dextrane enthalten.

Durch Pentrationsbeschleuniger wird die Aufnahme systemischer Wirkstoffe durch die Pflanze verstärkt. Zu diesem Zweck können beispielsweise Alkylsulfate, Alkylsulfonate, Alkaliseifen, Fettsäuresalze von mehrwertigen Metallen, Betaine, Aminoxide, Fettsäureester, Mono-, Di- oder Triglyceride, langkettige Alkohole, Sulfoxide, Nicotinsäureester, Salicylsäure, N-Methylpyrrolidon, 2-Pyrrolidon oder Harnstoff zugesetzt werden.

Als Klebrigmacher kann das Reservoir natürliche Harze oder Gummen, wie z.B. Mastix, Damar, Elemi, Styrax, Euphorbium, Sandarak, Galbanum, Gummi Arabicum oder Karaya, modifizierte Naturharze, wie z.B. Kolophoniumderivate, oder synthetische Harze oder Gummen, wie z.B. Polyacrylate, Polymethacrylate, Polyvinylether, Polyurethan, Polyisobutylene, Polyvinylester oder Silicone enthalten.

Geeignete Konservierungsmittel, die dem Reservoir zugesetzt werden können, sind beispielsweise p-Cl-m-Kresol, Phenylethylalkohol, Phenoxyethylalkohol, Chlorbutanol, 4-Hydroxybenzoesäuremethylester, 4-Hydroxybenzoesäurepropylester und Benzalkoniumchlorid, Cetylpyridiniumchlorid, Chlorhexidindiacetat oder -digluconat, Ethanol oder Propylenglykol.

Als Desinfektionsmittel können Halogenverbindungen, wie Polyvidon-Jod, Natriumhypochlorit oder Tosylchloramid, Oxidationsmittel wie Wasserstoffperoxid oder Kaliumpermanganat, Arylquecksilberverbindungen wie Phenylmercuriborat oder Merbromin, Alkylquecksilberverbindungen wie Thiomersal, Organozinnverbindungen wie Tri-n-butyl-zinnbenzoat, Silbereiweißverbindungen wie Silbereiweißacetyltannat, Alkohole wie Ethanol, n-Propanol oder Isopropanol, Phenole wie Thymol, o-Phenylphenol, 2-Benzyl-4-Chlorphenol, Hexachlorophen oder Hexylresorcin oder organische Stickstoffverbindungen wie 8-Hydroxychinolin, Chlorquinaldol, Clioquinol, Ethacridin, Hexetidin, Chlorhexidin oder Ambazon zugesetzt werden.

Geeignete pH-Regulatoren sind Glycin-, Citrat-, Borat, Phosphat- oder Citronensäure-Phosphat-Puffer.

Als Antioxidantien kann das Reservoir Ascorbinsäure, Ascorbylpalmitat, Tocopherolacetat, Propylgallat, Butylhydroxyanisol oder Butylhydroxytoluol enthalten.

Als Emulsionssstabilisatoren kommen nichtionogene Emulgatoren wie z.B. höhere Fettalkohole, Partialfettsäureester, mehrwertige Alkohole, Partialfettsäureester von Zuckern, Polyethylenglykolfettsäureester, Polyethylenglykolfettalkoholether, Polyethylenglykol-sorbitan-fettsäureester, sowie amphotere Emulgatoren wie Phospholipide, Ampholytseifen oder Eiweiße, kationaktive Emulgatoren wie quartäre Ammoniumverbindungen oder Pyridiniumverbindungen und anionaktive Emulgatoren wie fettsaure Salze von mehrwertigen Metallen, Alkylsulfate und Alkysulfonate in Betracht.

Als Füllstoffe können mikrokristalline Cellulose, Aluminiumoxid, Zinkoxid, Titandioxid, Talkum, Siliciumdioxid, Magnesiumsilikat, Magnesium-Aluminiumsilikat, Kaolin, hydrophobe Stärke, Calciumstearat oder Calciumphosphat Verwendung finden.

Als Vernetzungsmittel kann das Reservoir mehrwertige Metallkationen, mehrwertige Isocyanate, mehrwertige Aldehyde, mehrwertige Alkohole, mehrwertige Carbonsäuren oder Peroxide enthalten.

Als Hilfsstoffe können Reservoire auf Basis von lipophilen Polymerfilmen und Emulsionsfilmen zudem natürliche, halbsynthetische oder synthetische Fette und Öle wie Olivenöl, Ricinusöl, Erdnußöl, Sojaöl, Leinöl, Sesamöl, Jojobaöl, Avocadoöl, hydriertes Erdnußöl, hydriertes Ricinusöl, Triglyceridgemische (Miglyol ^{(R)}, Softisan ^{(R)}) oder Silikonöle, natürliche, halbsynthetische oder synthetische Wachse, wie Bienenwachs, Wollwachs, Erdwachs, Walrat, Ölsäureoleylester, Isopropylpalmitat, Isopropylmyristat, Ethyloleat, Cetylpalmitat oder Cetylstearat, Fettalkohole wie Dodecylalkohol oder Cetylalkohol, Fettsäuren wie Myristinsäure, Ölsäure oder Linolsäure, propoxylierte, ethoxylierte oder sulfatierte Fettalkohole, Fettsäurealkylamide, Fettsäure-Eiweiß-Kondensationsprodukte, Phospholipide, Sterine oder Kohlenwasserstoffe wie Paraffine oder Paraffinöle enthalten.

Wird als Reservoir ein Hydrogel oder eine wasserhaltige Emulsion verwendet, so wird die Permeabilität der verhärteten Abschlußgewebe für systemischen Wirkstoff unter okklusiver Einwirkung von Flüssigkeit durch Quellung der der Diffusion von systemischem Wirkstoff entgegenstehenden Sperrschicht erhöht. Dieser Effekt wird noch verstärkt, wenn dem im Reservoir enthaltenen Wasser oder der Mischung von Wasser und wassermischbaren Lösemitteln Hilfsstoffe wie beispielsweise Alkalien zugesetzt werden, die eine schnellere Aufweichung der verhärteten Abschlußgewebe bewirken.

Eine weitere bevorzugte Ausführungsform der erfindungsgemäßen Vorrichtung enthält entweder ein Reservoir mit einer porösen Struktur wie beispielsweise einen weichen Schaum, einen Vliesstoff, ein geschäumtes Trockengel, oder das Reservoir enthält ein textiles Flächengebilde auf Basis natürlicher, halbsynthetischer oder synthetischer Fasern. Der systemische Wirkstoff kann in dem betreffenden Reservoir gelöst, dispergiert, emulgiert oder in Mikrokapseln verteilt sein.

Es ist auch möglich, die zur Abgabe systemischer Wirkstoffe an die Pflanze fähige Form des Wirkstoffreservoirs erst unmittelbar vor oder während der Anwendung herzustellen. So kann beispielsweise systemischer Wirkstoff in Pulverform oder in Form einer getrockneten Zübereitung in einem Reservoir enthalten sein, welches eine poröse Struktur aufweist oder ein textiles Flächengebilde ist.
Vor der Anwendung wird eine definierte Flüssigkeitsmenge, die auch Hilfsstoffe enthalten kann, auf das Reservoir gegeben, wobei die Flüssigkeit so gewählt wird, daß die den Wirkstoff zumindest teilweise zu lösen in der Lage ist. Diese Ausführungsform ist besonders für Wirkstoffe vorteilhaft, die in gelöster Form eine Lagerstabilität von weniger als zwei Jahren aufweisen.

Es ist auch möglich, eine definierte Flüssigkeitsmenge, die systemischen Wirkstoff und ggf. Hilfsstoffe enthält, erst kurz vor der Anwendung auf das Reservoir der Vorrichtung zu geben, welches eine poröse Struktur aufweist oder ein textiles Flächengebilde ist und ebenfalls Hilfsstoffe wie beispielsweise Geliermittel enthalten kann.
Die Flüssigkeitszugabe kann während der Anwendung fortgesetzt werden.
Dies ist mit Hilfe der dem Fachmann aus der Medizin geläufigen Technik der Dauerinfusion oder der intermittierenden Infusion aus einem Vorratsgefäß, welches sich oberhalb der Applikationsstelle befindet, durch die Rückschicht in das Reservoir möglich. Diese Ausführungsform der Vorrichtung der Erfindung ermöglicht in vorteilhafter Weise die Zufuhr großer Wirkstoffmengen über kleine Flächen während eines langen Zeitraums. Zusätzlich kann über entsprechende bekannte Dosiereinrichtungen die Zufuhr systemischer Wirkstoffe den wechselnden Erfordernissen im Verlauf einer Vegetationsperiode angepaßt und so reguliert werden.

Das Wirkstof freservoir der Vorrichtung kann auch ein mehrschichtiges Laminat sein, wobei zumindest eine Schicht des Laminates systemischen Wirkstoff enthält. Dabei können die o.g. Reservoirtypen in beliebiger Kombination zu einem Mehrschichtverbund zusammengfügt sein.

Die einzelnen Verbundschichten können dabei in sich zusammenhängend und kohärent sein, sie können jedoch auch in Segmente unterteilt sein, die von der darüber oder darunter liegenden Schicht umgeben oder eingeschlossen werden, beispielsweise in Form von Speicherelement und umgebendem Abgabeelement.

In einem Mehrschichtverbund kann eine wirkstofffreie Schicht oder eine poröse Folie als Steuermembran zwischen verschiedenen Schichten oder zwischen Reservoir und Pflanze liegen. Das Wirkstoffreservoir kann zudem mindestens ein Trennelement enthalten. Beispielsweise können die voneinander getrennten Teile des Reservoirs dieselbe Wirksubstanz in unterschiedlichen Reservoirformulierungen enthalten.
Die unterschiedlichen Formulierungen können so ausgelegt sein, daß aus dem einen Teil systemischer Wirkstoff sehr schnell freigesetzt wird, um rasch eine ausreichende Wirkstoffkonzentration in der Pflanze zu erzielen, und daß aus dem anderen Teil systemischer Wirkstoff verzögert abgegeben wird, um die Wirkstoffkonzentration über den gewünschten Zeitraum aufrechtzuerhalten.
In den unterschiedlichen Teilen des Reservoirs können aber auch unterschiedliche Wirkstoffe zur Prophylaxe und Behandlung verschiedener Pflanzenkrankheiten enthalten sein. Die Trennung des Reservoirs ermöglicht es, daß getrennt voneinander für jeden Wirkstoff die optimale Formulierung für die Freisetzung dieses Wirkstoffes eingesetzt werden kann.
Der Vorteil dieser Ausführungsform liegt darin, daß in allen Fällen, in denen zum Schutz einer Pflanze mehrere systemische Wirkstoffe eingesetzt werden müssen, diese nicht notwendigerweise gleichzeitig mittels mehrerer Vorrichtungen appliziert werden müssen. Durch das Vorsehen der Trennschichten und den Aufbau in Trennelementen wird zudem sichergestellt, daß es nicht zu unerwünschten Wechselwirkungen zwischen verschiedenen Reservoirteilen und damit zu Veränderungen während der Lagerung kommen kann.

Vorzugsweise wird die gesamte Kontaktfläche der Vorrichtung zur Pflanze, insbesondere aber das Wirkstoffreservoir, vor der Anwendung durch eine Abdeckung geschützt, wobei diese Abdeckung zum besseren Entfernen bei der Anwendung eine Hilfe zum Abziehen aufweisen kann.
Die Rückschicht der Vorrichtung ist im allgemeinen so beschaffen, daß sie gegen äußerer Einflüsse wie Wasser, Wärme und Luft beständig ist und das Reservoir gegen diese Einflüsse schützt.

Rück- und Schutzschicht bestehen vorzugsweise aus Folien von Polyamid, Polycarbonat, Polyester, Polyethylen, Polypropylen, Polyvinylchlorid, Polyvinylester, Polyurethan, Polystyrol, Polytetrafluorethylen, Cellophan, Celluloseacetat, Aluminium oder aus Verbundfolien aus den genannten Materialien.

Vorteilhaft kann die Rückschicht beispielsweise zum Zwecke der Kennzeichnung oder Warnung bedruckt sein.

Nach einer besonderen Ausführungsform der Erfindung ist die Vorrichtung zumindest teilweise so beschaffen, daß sie verrottbar ist. Die Verrottung beispielsweise durch Einwirkung von UV-Strahlen oder biologischen Abbau wie Einwirkung von Mikroben oder Enzymen macht ein Entfernen der Vorrichtung nach Anwendung überflüssig. Die zum Einbau der Verrottung ergriffenen Maßnahmen werden so bemessen, daß die Zersetzung der Vorrichtung nach Ablauf der vorgesehenen Anwendungsdauer beginnt.

Die Befestigung der Vorrichtung auf der Pflanze kann nach verschiedenen Möglichkeiten erfolgen. Wenn Rückschicht und Wirkstoffreservoir gleiche Flächenabmessungen aufweisen, so wird die Zusammensetzung des verformbaren Reservoirs vorzugsweise so gewählt, daß es selbstklebende Eigenschaften besitzt, wobei diese Eigenschaften gleichermaßen eine hohe Anfangshaftung und eine hohe Klebekraft über einen weiten Temperaturbereich sicherstellen müssen, um eine sichere Haftung der Vorrichtung auf rauhen, unebenen und ggf. feuchten Oberflächen sowohl bei hohen Temperaturen im Sommer als auch bei niedrigen Temperaturen im Frühjahr oder Spätherbst zu gewährleisten. Weist das Reservoir nur geringe oder keine selbstklebenden Eigenschaften auf, so wird die Vorrichtung auf die Pflanze aufgebracht, mit leichtem Druck an deren Oberfläche angepaßt und anschließend mit einem herkömmlichen Klebeband, einer Klebefolie, einer Binde oder Bandage durch Umwickeln von Pflanzenteil und Vorrichtung befestigt.
Eine bevorzugte Befestigungsmöglichkeit besteht darin, daß die Rückschicht größere Flächenabmessungen als das Wirkstoffreservoir hat und daß zumindest die überstehenden, der Pflanzenoberfläche zugewandten Teile der Rückschicht selbstklebend ausgerüstet sind, so daß die Befestigung der Vorrichtung auf der Pflanzenoberfläche durch diese überstehenden Teile erfolgt.
Eine weitere Befestigungsmöglichkeit besteht darin, daß die Rückschicht in zwei einander gegenüber liegende, längliche Laschen oder Bänder ausläuft, die nach Applikation der Vorrichtung auf den Stamm einer Pflanze um den Stamm geführt und fest verknotet werden. Diese Laschen können aber auch mit Klettverschlüssen ausgerüstet oder so gestaltet sein, daß sie miteinander verzahnt werden können.

Vorzugsweise wird die Vorrichtung nach bekannten Verfahren hergestellt und einzeln konfektioniert. Haben Rückschicht, Wirkstof freservoir und ggf. Schutzschicht die gleiche Flächenabmessung, so können sie die Vorrichtungen zusammenhängend bahnförmig aufgerollt oder zusammengefaltet in einem Behältnis aufbewahrt werden. Der Anwender kann dann selbst Segmente, beispielsweise durch Schnitt, abtrennen, die eine dem Verwendungszweck entsprechende Fläche haben. Die Fläche der Segmente kann aber auch mittels Sollbruchlinien, beispielsweise durch Anstanzen oder Anschneiden vorgegeben werden, so daß der Anwender die einzelnen Segmente aufreißen kann, ohne technische Hilfsmittel verwenden zu müssen.

Die Vorteile der erfindungsgemäßen Vorrichtung zur Abgabe systemischer Wirkstoffe an Pflanzen werden insbesondere im Erwerbsanbau, wie Obst- und Weinbau, deutlich.
Der Schädlingsbekämpfung kommt auf diesen Gebieten eine große Bedeutung zu, da Schädlingsbekämpfungsmittel meist mehrmals im Verlauf einer Vegetationsperiode ausgebracht werden müssen.
Häufig ist eine schwierige Abwägung zu treffen zwischen den ökonomischen Aspekten auf der einen Seite sowie Umweltschutz und Vermeidung der Gefährdung von Mensch und Tier auf der anderen Seite, wenn die Schädlingsbekämpfungsmittel nach herkömmlichen Methoden ausgebracht werden. Diese Schwierigkeit entfällt bei Anwendung der erfindungsgemäßen Vorrichtung, da hierbei bei einmaliger Applikation die für eine Vegetationsperiode notwendigen Wirkstoffmengen kontrolliert an die Pflanze so abgegeben werden, daß ein Schutz der Pflanze vor dem entsprechenden Schädlingsbefall gegeben bzw. eine wirksame Bekämpfung der Schädlinge bei Befall über die gesamte Vegetationsperiode hin möglich ist, ohne daß die Umwelt belastet oder die Gesundheit von Mensch und Tier gefährdet ist. Darüberhinaus ermöglicht die Verwendung der erfindungsgemäßen Vorrichtung eine beträchtliche Material- und Wirkstoffersparnis, da die Ausnutzung des Wirkstoffes wesentlich effizienter als bei Anwendung herkömmlicher Techniken ist und zur Anwendung keinerlei Geräte benötigt werden. Desweiteren ist auch der Arbeitsaufwand für den Pflanzenschutz durch diese Maßnahme wesentlich verringert.

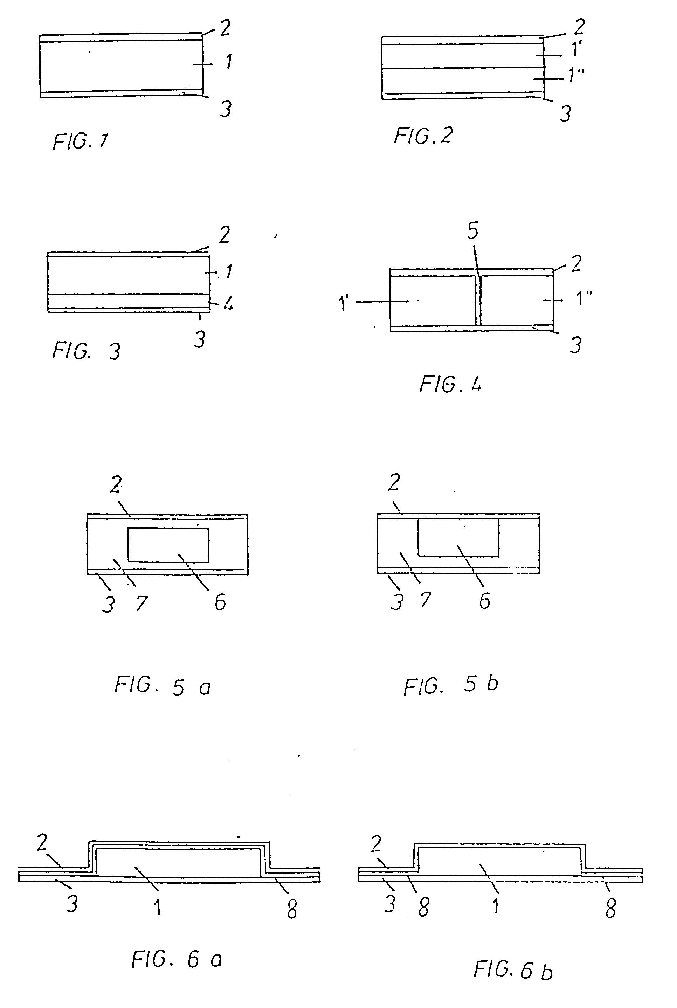

Zur Verdeutlichung der Erfindung werden die Figuren 1-6 nachfolgend erläutert:
Figur 1 zeigt eine Vorrichtung, bei der das Wirkstoffreservoir (1) auf einer Seite mit einer undurchlässigen Rückschicht (2) und auf der gegenüberliegenden Seite mit einer ablösbaren, undurchlässigen Schutzschicht (3) versehen ist.
Figur 2 stellt eine Vorrichtung mit mehrschichtigem Wirkstoffreservoir dar, wobei das Reservoir in zwei Schichten (1′,1˝) unterteilt ist.
   Bei der in Figur 3 dargestellten Zeichnung ist das wirkstoffhaltige Reservoir (1) auf der der Pflanze zugewandten Seite mit einer Steuermembran (4) kombiniert.
Figur 4 zeigt eine Ausführungsform, bei der das Wirkstoffreservoir durch ein Trennelement (5) in zwei Teile (1′,1˝) geteilt ist.
Die Figuren 5a und 5b zeigen Vorrichtungen mit einem in Segmente aufgeteilten Wirkstoffreservoir, welches ein Speicherelement (6) und ein Abgabeelement (7) aufweist.
Die Figuren 6a und 6b zeigen Vorrichtungen, bei denen das Wirkstoffreservoir (1) mit einer Schutzschicht (3) und mit einer Rückschicht (2) bedeckt ist. Die Schichten (3) und (2) weisen größere Flächenabmessungen als das Reservoir (1) auf und sind ganz (Fig. 6a) oder teilweise (Fig. 6b) mit einem Klebstoffilm (8) beschichtet.

Die Erfindung wird anhand der folgenden Beispiele erläutert:

### Beispiel 1:

75 g eines Ethylen-Vinylacetat-Copolymers mit einem Vinylacetatanteil von 28 Gew.-% und einem Schmelzindex von 800 (Evatane 28.800), 25 g eines Ethylen-Vinylacetat-Copolymers mit einem Vinylacetatanteil von 28 Gew.-% und einem Schmelzindex von 25 (Evatane 28.25), 275 g Hydroabietylalkohol (Abitol), 7,25 g Polyoxyethylen-(20)-Stearylether (Brij 78) und 7,25 g Polyoxyethylen-(2)-Stearylether (Brij 72) werden zusammen bei 110 °C aufgeschmolzen.
In der Schmelze werden 14,5 g eines quervernetzten Polyacrylsäure-Natriumsalzes (Aquakeep 10 SH) und 173 g eines 25%igen Spritzpulvers von Bitertanol (Baycor) dispergiert.
Die Schmelze wird bei einer Temperatur von 70 °C mit einem Auftragsgewicht von 1700 g/m² in einer Strichbreite von 20 cm auf ein silikonisiertes Papier geschichtet. Nach dem Abkühlen wird der Wirkstoffreservoirfilm auf die zuvor kleberbeschichtete Seite einer braun eingefärbten, zur Kleberschicht hin aluminisierten, 42 cm breiten Polyethylen-Trägerfolie (100 »m) zentral so aufkaschiert, daß die kleberbeschichtete Trägerfolie an beiden Seiten des Reservoirfilms 11 cm übersteht.
Anschließend wird eine 44 cm breite, silikonisierte Abdeckung so zukaschiert, daß der Reservoirfilm und die überstehenden, klebenden Teile der Trägerfolie bedeckt sind. Quer zur Laufrichtung werden alle 2 cm Bänder abgeschnitten, so daß die Abmessungen wie folgt sind: Band 2 x 44 cm, Träger (rückseitige Abdeckung) 2 x 42 cm, Wirkstoffreservoir 2 x 20 cm. Das Wirkstoffreservoir hat eine Dicke von ca. 2 mm und enthält 0,5 g Bitertanol.

### Beispiel 2:

75 g Polyvinylpyrrolidon (Kollidon 30), 75 g Gelatine, 50 g Glycerin und 1,5 g einer ca. 28 %igen Lösung verschiedener para-Hydroxybenzoesäureester in Phenoxyethanol (Phenonip) werden bei 70 °C in 300 g destilliertem Wasser gelöst.
In der Lösung werden 225 g eines ca. 75 %igen Pulverkonzentrates von Fosetyl-Aluminium (Aliette) gelöst bzw. dispergiert.
Die Masse wird bei einer Temperatur von 50 °C mit einem Auftragsgewicht von 1500 g/m² in einer Strichbreite von 20 cm auf einen 20 cm breiten Vliesstoff (Flächengewicht 80 g/m²) geschichtet. Nach dem Abkühlen wird das Wirkstoffreservoirlaminat mit der unbeschichteten Vliesstoffseite auf eine kleberbeschichtete Polyethylenträgerfolie zentral aufkaschiert (entsprechend Beispiel 1); es wird mit einer silikonisierten Folie abgedeckt (entsprechend Beispiel 1) und einzelne Bänder hergestellt mit den Abmessungen wie in Beispiel 1.
Das Wirkstoffreservoir hat eine Dicke von ca. 2 mm und enthält 1,4 g Fosetyl-Aluminium.

### Beispiel 3:

Es werden wirkstofffreie Vorrichtungen analog Beispiel 2 hergestellt (Vliesstoff 40 cm² auf kleberbeschichteter Polyethylen-Trägerfolie 84 cm²).
Die Vliesstoffkissen werden jeweils mit 4 g eines 12 %igen Emulsionskonzentrats von Fenarimol (Rubigan) getränkt und die Vorrichtungen mit silikonisierter Folie abgedeckt.
Die Vorrichtungen gemäß den Beispielen 1-3 enthalten systemische Fungizide, die z.B. an Apfelbäumen zur Bekämpfung von Schorfpilzen eingesetzt werden.

Zur Prüfung der Wirksamkeit wurden die Vorrichtungen nach den Beispielen 1-3 und entsprechende wirkstofffreie Placebo-Vorrichtungen bei einjährigen Apfelbäumen, Sorte Gloster, im Frühjahr bei beginnender Endknospenaktivität auf den Stamm knapp oberhalb der Veredelungsstelle durch Umwickeln des Stammes appliziert.
Einige Bäume blieben zum Vergleich unbehandelt. Es wurde die Wirksamkeit nach zwei und sechs Monaten anhand des Grades des Pilzbefalles und der Auskeimung der Pilze (Anzahl der Blätter mit Schorfflecken, Anzahl der Schorfflecken pro Blatt), im Vergleich zu den unbehandelten Bäumen beurteilt. Zur Beurteilung evtl. phytotoxischer Eigenschaften wurde als Maß für die Triebigkeit die Anzahl der Blätter bestimmt.

Mit den Vorrichtungen gemäß den Beispielen 1-3 konnte im Vergleich zu den unbehandelten und zu den placebobehandelten Bäumen ein signifikanter Schutz der Bäume erreicht werden. Die mit den Vorrichtungen nach den Beispielen 1 und 3 behandelten Bäume zeigten auch nach 6 Monaten Behandlungsdauer nur vereinzelte Schorfflecken; die mit der Vorrichtung nach Beispiel 2 behandelten Bäume waren frei von Schorfbefall, während bei den unbehandelten und den placebobehandelten Bäumen über 50 % der Blätter starken Pilzbefall zeigten. Phytotoxische Symptome wurden vereinzelt bei Bäumen, die mit den Vorrichtungen gemäß Beispiel 2 behandelt worden waren, beobachtet.
Die Anzahl der Blätter lag bei diesen Bäumen um ca. 15-20 % unter den Werten der mit den Vorrichtungen gemäß den Beispielen 1 und 3 behandelten Bäumen, der placebobehandelten sowie der unbehandelten Bäume.

## Patentansprüche

1. Vorrichtung zur Abgabe systemischer Wirkstoffe an Pflanzen durch Pflanzenoberflächen, die aus sekundären, verhärteten Abschlußgeweben bestehen und nicht von einer Cutikula bedeckt sind, die aus einer Rückschicht und einem als Kontaktschicht zur Pflanzenoberfläche wirkenden Wirkstoffträger besteht, dadurch gekennzeichnet, daß die Vorrichtung als Wirkstoffträger ein verformbares, an unebene Oberflächen anpaßbares Wirkstoffreservoir besitzt, welches aus mindestens einem Elastomer oder wasserlöslichen oder - quellbaren Polymer aufgebaut ist, und das neben anderen Hilfsstoffen Penetrationsbeschleuniger enthält, welche die sekundären, verhärteten Abschlußgeweben der Pflanzenoberfläche so verändern, daß sie für die Wirkstoffe durchlässig sind.

2. Vorrichtung nach Anspruch 1, dadurch gekennzeichnet, daß die Penetrationsbeschleuniger ausgwählt sind aus der Gruppe bestehend aus Alkylsulfaten, Alkylsulfonaten, Alkaliseifen, Fettsäuresalzen mehrwertiger Metalle, Betainen, Aminoxiden, Fettsäureestern, Mono-, Di- und Triglyceriden, langkettigen Alkoholen, Sulfoxiden, Nikotinsäureestern, Salicylsäure, N-Methylpyrrolidon, 2-Pyrrolidon, Harnstoff, Wasser und wäßrigen Alkalilösungen.

3. Vorrichtung nach Anspruch 1 oder 2, dadurch gekennzeichnet, daß das Reservoir
a) 1 bis 80 Gew.-% mindestens eines Elastomeres,
b) 0,5 bis 50 Gew.-% mindestens eines Weichmachers,
c) 0,5 bis 50 Gew.-% mindestens eines systemischen Wirkstoffes und
d) 0,5 bis 70 Gew.-% Hilfsstoffe
enthält.

4. Vorrichtung nach Anspruch 1 oder 2, dadurch gekennzeichnet, daß das Reservoir
a) 0,5 bis 50 Gew.-% mindestens eines wasserlöslichen oder wasserquellbaren Polymers,
b) 0,5 bis 50 Gew.-% mindestens eines systemischen Wirkstoffs,
c) 0,5 bis 70 Gew.-% Hilfsstoffe und
d) 1 bis 80 Gew.-% Wasser
enthält.

5. Vorrichtung nach einem der Ansprüche 1 bis 4, dadurch gekennzeichnet, daß das Reservoir eine poröse Struktur oder ein textiles Flächengebilde enthält, in denen der systemische Wirkstoff verteilt ist.

6. Vorrichtung nach einem der Ansprüche 1 bis 5, dadurch gekennzeichnet, daß das Reservoir ein Laminat aus mehreren Schichten ist, wobei zumindest in einer Schicht systemischer Wirkstoff enthalten ist.

7. Vorrichtung nach einem der Ansprüche 1 bis 6, dadurch gekennzeichnet, daß das Reservoir ein Trennelement, insbesondere ein Steuerelement, in Form einer Membran enthält.

8. Vorrichtung nach einem der Ansprüche 1 bis 7, dadurch gekennzeichnet, daß die Vorrichtung zumindest teilweise verrottbar ist.

9. Vorrichtung nach einem der Ansprüche 1 bis 8, dadurch gekennzeichnet, daß die Kontaktfläche des Wirkstoffreservoirs zur Pflanze vor der Applikation durch eine Abdeckung geschützt ist.

10. Vorrichtung nach einem der Ansprüche 1 bis 9, dadurch gekennzeichnet, daß die systemischen Wirkstoffe, Pestizide, Insektizide, Fungizide oder wachstumsbeeinflussende Substanzen sind.

11. Vorrichtung nach Anspruch 1 bis 10, dadurch gekennzeichnet, daß die wirkstoffundurchlässige Rückschicht bedruckt ist.

12. Verfahren zur Abgabe systemischer Wirkstoffe an Pflanzen mit einer Oberfläche aus sekundären, verhärteten Abschlußgeweben, die nicht von einer Cuticula bedeckt sind, dadurch gekennzeichnet, daß eine Vorrichtung nach einem oder mehreren der Ansprüche 1 bis 11, auf die sekundären Abschlußgewebe aufgebracht wird, die aus einer Rückschicht und einem als Kontakschicht zur Pflanzenoberfläche wirkenden verformbaren Wirkstoffreservoir besteht, und durch Andruck an die unebene Oberfläche für den Applikationszeitraum bleibend angepaßt wird, und daß der systemische Wirkstoff in Lösung durch die durch Zusatz von flüssigen Stoffen zur Penetrationsbeschleunigung veränderte Pflanzenoberfläche aus dem Wirkstoffreservoir an die Pflanze abgegeben wird.

13. Verfahren nach Anspruch 12, dadurch gekennzeichnet, daß der systemische Wirkstoff erst unmittelbar vor oder während der Applikation in oder auf das Reservoir gebracht wird.

## Claims

1. A device for the release of systemic active substances to plants through plant surfaces which consist of secondary, hardened superficial tissues not being covered by a cuticula, said device consisting of a backing layer and an active substance carrier acting as contact layer to the surface of the plant, characterized in that the device has a deformable active substance reservoir as active substance carrier, which reservoir is adaptable to uneven surfaces, is composed of at least one elastomer or water-soluble or water-swellable polymer and, in additon to other auxiliary agents, contains penetration accelerators altering the secondary, hardened superficial tissues of the plant surface in such a way that said tissues become permeable to active substances.

2. The device according to claim 1, characterized in that the penetration accelerators are selected from the group consisting of alkyl sulfates, alkyl sulfonates, alkali soaps, fatty acid salts of multivalent metals, betains, amine oxides, fatty acid esters, mono-, di-, and triglycerides, long-chain alcohols, sulfoxides, nicotinic acid esters, salicylic acid, N-methylpyrrolidone, 2-pyrrolidone, urea, water and aqueous alkali solutions.

3. The device according to claim 1 or 2, characterized in that the reservoir comprises
a) 1 to 80%-wt. of at least one elastomer,
b) 0.5 to 50%-wt. of at least one softener,
c) 0.5 to 50%-wt. of at least one systemic active substance, and
d) 0.5 to 70%-wt. of auxiliaries.

4. The device according to claim 1 or 2, characterized in that the reservoir comprises
a) 0.5 to 50%-wt. of at least one water-soluble or water-swellable polymer,
b) 0.5 to 50%-wt. of at least one systemic active substance,
c) 0.5 to 70%-wt. auxiliaries, and
d) 1 to 80%-wt. water.

5. The device according to any one of claims 1 to 4, characterized in that the reservoir comprises a porous structure or a textile fabric in which systemic active substance is distributed.

6. The device according to any one of claims 1 to 5, characterized in that the reservoir is a laminate of several layers, whereby systemic active substance is contained in at least one layer.

7. The device according to any one of claims 1 to 6, characterized in that the reservoir comprises a separating element, particularly a controlling element in the form of a membrane.

8. The device according to any one of claims 1 to 7, characterized in that it is at least partially rottable.

9. The device according to any one of claims 1 to 8, characterized in that the contact surface of the active substance reservoir to the plant is protected by a covering prior to application.

10. The device according to any one of claims 1 to 9, characterized in that the systemic active substances are pesticides, insecticides, fungicides, or growth influencing substances.

11. The device according to any one of claims 1 to 10, characterized in that the backing layer, which is impermeable to active substances, is printed.

12. A method for the release of systemic active substances to plants having a surface of secondary, hardened superficial tissues which are not covered by a citucula, characterized in that a device according to one or more of claims 1 to 11 is applied to the secondary superficial tissues, which device consists of a backing layer and a deformable active substance reservoir acting as contact layer to the plant surface, and, by pressing it against the uneven surface, is durably adapted thereto for the period of application, and that the systemic active substance is delivered from the active substance reservoir to the plant through the plant surface, which plant surface has been altered by adding liquid substances for penetration acceleration.

13. The method according to claim 12, characterized in that the systemic active substance is applied in or to the reservoir only immediately prior to or during application.

## Revendications

1. Dispositif pour délivrer des principes actifs systémiques à des plantes à travers des surfaces de plantes, qui se composent de tissus occlusifs durcis et secondaires et non recouvertes d'une cuticule, lequel dispositif est formé d'une couche dorsale et d'un support de principe actif agissant comme une couche de contact avec la surface des plantes, dispositif caractérisé en ce qu'il possède, à titre de support de principe actif, un réservoir de principe actif déformable, adaptable à des surfaces inégales, qui est constitué d'au moins un élastomère, ou d'un polymère soluble dans l'eau ou gonflable dans l'eau et qui, outre d'autres adjuvants, contient des accélérateurs de pénétration, qui modifient les tissus occlusifs durcis et secondaires des surfaces des plantes en une manière telle qu'elles soient perméables aux principes actifs.

2. Dispositif suivant la revendication 1, caractérisé en ce que l'on choisit les accélérateurs de pénétration dans le groupe formé par les alkylsulfates, les alkylsulfonates, les savons d'alcalis, les sels d'acides gras de métaux polyvalents, les bétaïnes, les oxydes d'amines, les esters d'acides gras, les mono-, di- et triglycérides, les alcools à longues chaînes, les sulfoxydes, les esters de l'acide nicotinique, l'acide salicylique, la N-méthylpyrrolidone, la 2-pyrrolidone, l' urée, l'eau et des solutions aqueuses d'alcalis.

3. Dispositif suivant la revendication 1 ou 2, caractérisé en ce que le réservoir contient
a) 1 à 80% en poids d'au moins un élastomère,
b) 0,5 à 50% en poids d'au moins un plastifiant,
c) 0,5 à 50% en poids d'au moins un principe actif systémique et
d) 0,5 à 70% en poids d'adjuvants.

4. Dispositif suivant la revendication 1 ou 2, caractérisé en ce que le réservoir contient
a) 0,5 à 50% en poids d'au moins un polymère soluble dans l'eau ou gonflable dans l'eau,
b) 0,5 à 50% en poids d'au moins un principe actif systémique,
c) 0,5 à 70% en poids d'adjuvants et
d) 1 à 80% en poids d'eau.

5. Dispositif suivant l'une quelconque des revendications 1 à 4, caractérisé en ce que le réservoir contient une structure poreuse ou un article textile plat, où le principe actif systémique est réparti.

6. Dispositif suivant l'une quelconque des revendications 1 à 5, caractérisé en ce que le réservoir est un lamifié constitué de plusieurs couches, parmi lesquelles au moins une couche contient le principe actif systémique.

7. Dispositif suivant l'une quelconque des revendications 1 à 6, caractérisé en ce que le réservoir contient un élément séparateur, plus particulièrement un élément de commande, sous forme d'une membrane.

8. Dispositif suivant l'une quelconque des revendications 1 à 7, caractérisé en ce qu'il est au moins partiellement dégradable ou pourrissable.

9. Dispositif suivant l'une quelconque des revendications 1 à 8, caractérisé en ce que la surface de contact du réservoir de principe actif avec la plante est protégé par un recouvrement avant l'application.

10. Dispositif suivant l'une quelconque des revendications 1 à 9, caractérisé en ce que les principes actifs systémiques sont des pesticides, des insecticides, des fongicides, ou des substances influençant la croissance.

11. Dispositif suivant l'une quelconque des revendications 1 à 10, caractérisé en ce que la couche dorsale perméable au principe actif porte une impression.

12. Procédé pour délivrer des principes actifs à des plantes à surfaces en tissus occlusifs durcis et secondaires, qui ne sont pas recouvertes d'un cuticule, caractérisé en ce que l'on applique un dispositif suivant l'une quelconque des revendications 1 à 11 sur les tissus occlusifs secondaires, qui se compose d'une couche dorsale et d'un réservoir de principe actif déformable agissant comme couche de contact avec la surface des plantes et que l'on adapte en permanence par pression aux surfaces inégales pour la période d'application et en ce que le principe actif systémique en solution est délivré aux plantes à partir du réservoir de principe actif à travers les surfaces des plantes modifiées par l'addition de substances liquides en vue de l'accélération de la pénétration.

13. Procédé suivant la revendication 12, caractérisé en ce que le principe actif systémique n'est introduit dans ou n'est appliqué sur le réservoir que seulement immédiatement avant ou pendant l'application.
